# EUROPEAN PATENT APPLICATION

(11) **EP 4 227 384 A1**
(43) Date of publication of application: **16.08.2023**
(21) Application number: 21882003.3
(22) Date of filing: 19.10.2021
(51) Int. Cl.: C10G 29/04, C10G 45/02, C10G 69/02

(54) **METHOD AND SYSTEM FOR PRODUCING FUEL OIL AND USE THEREOF, AND FUEL OIL AND USE THEREOF**

(30) Priority: 19.10.2020 CN 202011115313
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: PENG, Chong, Dalian, Liaoning 116045 (CN); FANG, Xiangchen, Dalian, Liaoning 116045 (CN); QIAO, Kai, Dalian, Liaoning 116045 (CN); WANG, Gang, Dalian, Liaoning 116045 (CN)
(74) Representative: karo IP
(86) International application number: PCT/CN2021/124716
(87) International publication number: WO 2022/083587

(57) **Abstract**

Disclosed is a method and system for producing a fuel oil and the use thereof, and a fuel oil and the use thereof. The method comprises: (1) bring a sulfur-containing feedstock oil and an alkali metal into contact for a pre-reaction to obtain a pre-reaction material, wherein the pre-reaction is performed under hydrogen-free conditions; (2) bring the pre-reaction material into contact with a hydrogen-supplying agent for a hydrogenation reaction; and (3) separating the material obtained in step (2) to obtain a liquid-phase product fuel oil and a solid mixture. By means of the method of the present invention, inferior and cheap feedstock oils, such as heavy residual oils, can be converted into fuel oils, with a high utilization efficiency of alkali metals and a safe and reliable process.

## Description

### CROSS REFERENCE TO RELATED APPLICARTIONS

This application claims the benefit of the Chinese patent application No. "202011115313.3", filed on October 19, 2020, and the content of which is specifically and entirely incorporated herein by reference.

### TECHNICAL FIELD

The invention relates to the technical field of processing and utilizing the sulfur-containing feedstock oil, in particular to a method and system for producing fuel oil and its application, and fuel oil and its application thereof.

### BACKGROUND TECHNOLOGY

As the global environmental protection regulations become more stringent, the clean low-sulfur marine fuel oils will become one of the fuel products attracting vast attention in the next years after the clean gasoline and diesel oil have accomplished the quality upgrading. It is stipulated by *the International Convention for the Prevention of Pollution from Ships (MARPOL)* formulated by the International Maritime Organization (IMO) that the sulfur mass fraction of the marine fuel oil used for navigation in the general marine areas will drastically drop from no more than 3.5% at present to no more than 0.5%; while the sulfur mass fraction of the marine fuel oil should not exceed 0.1% when the ships are operating in the emission control area, the international convention is enacted as of January 2020. Conventionally, the marine fuel oils are mainly divided into two major groups, namely distillate type fuel oils and residual type fuel oils. The distillate type fuel oils are mainly used in medium-speed marine engines; while the residual type fuel oils are generally formed by mixing heavy oil with light fractions, and have the advantages of high calorific value, excellent combustion properties, stable in the storage conditions and low corrosion, thus the residual type fuel oils are excellent fuels for a wide range of applications, especially the most economically desirable fuels for large-horsepower medium and low-speed marine engines such as large ocean-going vessels. High-sulfur residual type marine fuel oils dominate about 70% of the market share due to its price advantage, and the distillate type fuel oils occupies about 25% of the market share, the remaining market share is split by the low-sulfur fuel oils and a small amount of liquefied natural gas.

The China patent application CN109705909A discloses a method for producing marine fuel oil from coal tar, the method specifically comprises: feeding a coal tar full-fraction raw material, after dehydration and mechanical impurity removal, into a slurry bed hydrogenation reactor to perform the hydrogenation treatment; subjecting the slurry bed hydrogenation reactor effluent after the hydrogenation treatment to separation, atmospheric fractionation and vacuum fractionation successively to prepare an atmospheric top oil stream, a first atmospheric side oil stream, a first vacuum side oil stream and a bottom vacuum oil stream, wherein a mixture of the first atmospheric side oil stream and a part of the bottom vacuum oil stream is a marine light fuel oil product, and a mixture of the first vacuum side oil stream and the rest of the bottom vacuum oil stream is a marine heavy fuel oil product. Although the method can be used for preparing the low-sulfur marine fuel oil products, the method is substantially characterized by blend the high quality oil product with the inferior quality oil product, it is impossible to fulfill the purpose of making the best use of fuel oils.

The China patent application CN103695031A discloses a method for producing diesel oil and bunker fuel blend component from coal tar, the method comprises the following steps: after mixing full-range coal tar fraction with hydrogen, introducing the mixer into a pre-hydrogenation slurry bed reactor to perform pre-hydrogenation reaction; performing gas-liquid separation and fractionation on a pre-hydrogenation reaction product, then fractionating a liquid product into a light component and a heavy component, wherein a part of the heavy component is discharged out of a device as bunker fuel, the rest heavy component is mixed with the light component and further subjected to the hydrofining to produce the clean diesel oil. The method consumes large amount of hydrogen gas, and the byproduct diesel components exhibit poor lubrication performance, the diesel components cannot meet the national V/national VI diesel oil standards of China.

The China patent application CN106811242B discloses an environment-friendly low-carbon novel marine fuel oil with a high heat value, the environment-friendly low-carbon novel marine fuel oil in a formula comprises, by weight, 600-750 kg of main raw materials for marine fuel oil, 250-350 kg of soft water, 80-120 kg of emulsified liquid, 1-3 kg of cetane number increasing agents, 0.05-0.15 kg of biphenyl, 0.15-0.3 kg of polyisobutene amine, 0.005-0.015 kg of benzotriazole and 0.3-0.5 kg of ferrocene. The environment-friendly low-carbon novel marine fuel oil has the advantages that components for the environment-friendly low-carbon novel marine fuel oil are mixed with one another by the aid of 500kHz high-frequency and 25KW high-power ultrasonic microemulsifying machines and homogenous high-speed shearing machines to obtain the environment-friendly low-carbon novel marine fuel oil, and the marine distillate fuel oil is clear and transparent, and is free of color change or oil-water layering after being used for 3 years. The environment-friendly low-carbon novel marine fuel oil is suitable for use by marine diesel main engines and power generators, and has the advantages of being environmentally friendly, low-carbon, saving-energy, a high heat value, low costs, anti-rust, anti-corrosion and the like; however, the invention actually meet the standard and requirements of marine fuel oil by adding some chemical additives into the high quality oil product, thus the invention cannot be adapted to the purpose of producing low-sulfur marine fuel oil with a wide range of raw materials.

The reaction of an alkali metal with a portion of heteroatoms and/or one or more heavy metals (i.e., alkali metal desulfurization process) can improve the feedstock quality, however, the current method and reaction process are inefficient, particularly the utilization rate of alkali metal is not high, the product contains the unreacted alkali metal, the further treatment of the unreacted alkali metal in the product is required to meet the demands of low-sulfur marine fuel oils. As a result, it is a critical challenge which shall be urgently overcome in the petroleum refining field, namely how to efficiently utilize the alkali metal desulfurization technologies in the field of producing low-sulfur marine fuel oils.

### SUMMARY OF THE INVENTION

In view of the deficiencies of the prior technology, the invention provides a method for producing fuel oil, which can convert inferior and cheap sulfur-containing feedstock oils, such as heavy residual oils, into the low-sulfur marine fuel oils with a high utilization efficiency of alkali metals and a safe and reliable process.

The alkali metal is a strong reductant, but the use of alkali metal instead of conventional hydrogenation catalysts for reducing the impurities (e.g., metals, sulfur, nitrogen, oxygen) in the feedstock oil is rarely studied, and the primary reason is that the impurities (e.g., metals, sulfur, nitrogen, oxygen) in the feedstock oils are bound to carbon atoms and are encapsulated by an organic substance in an organic phase, which is difficult for the alkali metal as an inorganic phase to contact and react effectively with the metals, sulfur, nitrogen, oxygen and other impurities in the feedstock oil. The use of batch-type or continuous stirred tank reactors can enhance the dispersion of alkali metal while simultaneously performing hydrodemetallization, hydrodesulfurization, and hydrodeoxygenation reactions, it is considered by those skilled in the art to be the most effective means of removing impurities with an alkali metal, but the method cannot be industrially applied due to the following problems: (1) the batch-type stirred tank reactors cannot be operated continuously, the efficiency is low; and (2) the continuous stirred tank reactors have the problem that the residence time of the materials can hardly be precisely controlled, for example, some unreacted feedstock oil and alkali metal may flow out of the reactor, or some materials are retained in the reactor throughout the reaction process.

The inventors have discovered through in-depth researches that although the alkali metal can hardly dispersed in the feedstock oil due to the different polarity of the alkali metal and the feedstock oil, even if the dispersion is forcibly performed, the inorganic phase of alkali metal tends to aggregate rapidly after placement, which separates from the organic phase of the feedstock oil, but the alkali metal is more easily dispersed in the feedstock oil than alkali metal sulfide after pre-reaction of the alkali metal and the feedstock oil, alkali metal sulfide, which is similar to an amphoteric surfactant, has both polarity and non-polarity, greatly facilitates dispersion of alkali metal in the feedstock oil, and maintains a stable dispersion state.

In view of the significant findings of the inventors in the researches, the invention proposes that blending a mixed raw materials consisting of a sulfur-containing feedstock oil and an alkali metal feedstock by passing through a mixer, especially under an elevated temperature, will cause a portion of the alkali metal to react with the sulfur in the feedstock to produce the inorganic compound alkali metal sulfide, which facilitates the variable mediation ability of the mixed materials, the generated alkali metal ions and the organic compounds form a stable cation-π interaction, promoting the dispersion of the inorganic compound alkali metal in the organic compound feedstock oil.

In addition, the invention further designs a continuous reaction system which solves the conventional problems, for example, the batch-type stirred tank reactors cannot be operated continuously, the efficiency is low; and the continuous stirred tank reactors have the problem that the residence time of the materials can hardly be precisely controlled, thus some unreacted feedstock oil and alkali metal may flow out of the reactor, or some materials are retained in the reactor throughout the reaction process.

A first aspect of the invention provides a method for producing fuel oil, and the method comprises the following steps:
(1) bringing a sulfur-containing feedstock oil and an alkali metal into contact for a pre-reaction to obtain a pre-reaction material, wherein the pre-reaction is performed under hydrogen-free conditions; the pre-reaction temperature is preferably within a range of 200°C-400°C, more preferably 300°C-380°C;
(2) contacting the pre-reaction material with a hydrogen-supplying agent to perform a hydrogenation reaction;
(3) separating the material obtained in step (2) to obtain a liquid-phase product fuel oil and a solid mixture.

Preferably, the hydrogen-free conditions in step (1) refer to that a small amount of the hydrogen-supplying agent is added or not added in the pre-reaction process, a molar ratio of a hydrogen-supplying agent to an alkali metal is preferably less than 0.5.

Preferably, the alkali metal in step (1) is provided in the form of a molten alkali metal.

Preferably, the alkali metal in step (1) is one or more selected from the group consisting of lithium, sodium, potassium, rubidium, cesium and francium.

A mass ratio of the alkali metal in step (1) relative to sulfur in the sulfur-containing feedstock oil is 0.8-3.0:1, preferably 1.2-2.5:1, more preferably 1.1-1.4:1.

Preferably, the sulfur-containing feedstock oil contains one or more of a carbon atom, heteroatoms and a heavy metal.

Preferably, the heteroatoms comprise sulfur and/or nitrogen.

Preferably, the sulfur content in the sulfur-containing feedstock oil is 1.0 wt% or more, preferably 1.8-8.0 wt%, more preferably 2-3 wt%.

Preferably, the sulfur-containing feedstock oil has a density within a range of 980-1,000 kg/m³, and/or a heavy metal content within a range of 110-150 wppm, and/or a carbon residue content within a range of 7-10 wt%, and/or a viscosity within a range of 800-20,000 cSt.

More preferably, the feedstock oil is one or more selected from the group consisting of heavy residual oils, shale oil and oil sand oil.

It is further preferred that the heavy residual oils are one or more elected from the group consisting of atmospheric residual oils, vacuum residual oils, cracker residual oils, residual oil cracked diesel and catalytic diesel oil during the processing of crude oil.

Preferably, the contact in step (1) is performed in a mixer.

Preferably, the mixer is one or more selected from the group consisting of a pipeline mixer, a liquid-liquid stirring mixer, a whirlpool mixer and a static mixer.

Preferably, the mixer comprises a closed feed hopper, a mixer body, a drive shaft assembly, a pulley mechanism and an electric motor; the mixer body comprises a stationary millstone fixed inside the mixer body and a movable millstone for cooperating with the stationary millstone; the movable millstone is connected with the drive shaft assembly, the pulley mechanism and the electric motor to provide a power source; the stationary millstone and the movable millstone are set to be corresponding in an one-by-one manner to form a group, preferably 1-7 groups, more preferably 2-4 groups are set sequentially in a longitudinal direction of the drive shaft assembly.

More preferably, the mixing process in the mixer comprises: the sulfur-containing feedstock oil and the alkali metal source in the molten state enter a closed feed hopper from the top of said mixer, then access the mixer body, the stationary millstones are fixed on the mixer body and in a relatively static state; the electric motor provides power, and perform power transmission via the pulley mechanism, so that the drive shaft assembly starts to operate, in the meanwhile, the movable millstones drive the corresponding stationary millstones to rotate, such that the reactants are sufficiently blended during the flow process from the top to the bottom.

Preferably, the hydrogen-supplying agent in step (2) is a substance containing at least one hydrogen atom, preferably hydrogen gas and/or a substance containing at least one carbon atom and at least one hydrogen atom.

Preferably, the hydrogen-supplying agent is hydrogen gas and/or C1-C5 lower carbon hydrocarbons; more preferably, the lower carbon hydrocarbon is one or more selected from the group consisting of methane, ethane, propane, butane, pentane, ethylene, propylene, butylene, pentene and diene, preferably the hydrogen-supplying agent is hydrogen gas and/or ethane.

Preferably, the used amount of hydrogen-supplying agent in step (2) is within a range of 1.0-3.0 mole hydrogen/mole sulfur, preferably within a range of 1.5-2.5 mole hydrogen/mole sulfur, calculated based on hydrogen gas.

Preferably, the conditions of the hydrogenation reaction in step (2) comprise: an operating pressure within a range of 4.0-10.0 Mpa, preferably 6.0-8.0 Mpa; and/or a reaction temperature within a range of200°C-430°C, preferably 300°C-380°C, more preferably 365°C-380°C.

Preferably, the step (2) is performed in a reactor, which is one or more selected from the group consisting of a suspended bed reactor, an ebullated bed reactor, a fixed bed reactor, and a CSTR (Continuous Stirred-Tank Reactor) reactor.

Preferably, the reactor is a suspended bed reactor, the operating conditions comprise: a reaction pressure within a range of 4.0-10.0 MPa, preferably 6.0-8.0 MPa; a reaction temperature within a range of 200-430°C, preferably 300-380°C, more preferably 365-380°C.

Preferably, the step (2) is performed in the presence of a catalyst, an active metal element of the catalyst comprise one or more of molybdenum, nickel and cobalt, the catalyst is preferably one or more selected from the group consisting of metallic molybdenum, metallic nickel, metallic cobalt, molybdenum alloy, nickel alloy, cobalt alloy, molybdenum oxide, nickel oxide and cobalt oxide; the molybdenum alloy is preferably a molybdenum alloy containing nickel and/or cobalt, the nickel alloy is preferably a nickel alloy containing cobalt and/or molybdenum.

Preferably, the separating in step (3) is performed using one or more of cyclone separation, centrifuge separation, extraction separation, filtration separation and sedimentation separation; preferably cyclone separation; more preferably, the operating temperature of the cyclone separation is within a range of 150°C-380°C, preferably 200°C-330°C, more preferably 280°C-290°C.

Preferably, the method comprises: before the separating in step (3) is carried out, subjecting the material obtained in step (2) to a stabilization treatment under the hydrogenation reaction conditions for a stabilization period of 1-6h, preferably 2-3h.

Preferably, the method further comprises a step (4) of mixing the solid mixture obtained in step (3) with a polar solvent capable of dissolving an alkali metal sulfide, the alkali metal sulfide in the solid mixture is dissolved in the polar solvent, thereby achieving separation of solids comprising metal sulfides and colloidal asphaltenes.

Preferably, the polar solvent in step (4) is one or more selected from the group consisting of N,N-dimethylaniline, quinoline, 2-methyltetrahydrofuran, benzene, tetrahydrofuran, cyclohexane, fluorobenzene, trifluorobenzene, toluene, xylene, tetraethyleneglycol dimethyl ether, diglyme, isopropanol, ethylpropionaldehyde, dimethyl carbonate, dimethoxy ether, dimethyl propyleneurea, ethanol, ethyl acetate, propylene carbonate, ethylene carbonate and diethyl carbonate.

Preferably, the method further comprises a step (5) of introducing the alkali metal sulfide-containing polar solvent obtained in said step (4) into an electrolysis unit, electrolyzing the alkali metal sulfide to produce an alkali metal and sulfur, and recycling the alkali metal as a raw material.

Preferably, the method comprises the following steps:
(1) carrying out a pre-reaction of the sulfur-containing feedstock oil with an alkali metal in a mixer to obtain a pre-reaction material, the pre-reaction is performed under hydrogen-free conditions, the pre-reaction temperature is within a range of 200°C-400°C, preferably within a range of 300°C-380°C;
(2) contacting the pre-reaction material with a hydrogen-supplying agent to perform a hydrogenation reaction;
(3) separating the material obtained in step (2) to obtain a liquid-phase product fuel oil and a solid mixture;
(4) mixing the solid mixture obtained in step (3) with a polar solvent capable of dissolving an alkali metal sulfide, the alkali metal sulfide is dissolved in the polar solvent, thereby achieving separation of solids comprising metal sulfides and colloidal asphaltenes;
(5) introducing the alkali metal sulfide-containing polar solvent obtained in step (4) into an electrolysis unit, electrolyzing the alkali metal sulfide to generate an alkali metal and sulfur, and recycling the alkali metal as a raw material.

A second aspect of the invention provides a fuel oil produced with the method of the invention.

A third aspect of the invention provides an application of the method of the invention in the production of low-sulfur marine fuel oil.

A fourth aspect of the invention provides an application of the fuel oil as described in the invention as the marine fuel oil.

A fifth aspect of the invention provides a system for producing a fuel oil, the system comprises:
(1) a pre-reaction unit for bringing a sulfur-containing feedstock oil and an alkali metal into contact for a pre-reaction to obtain a pre-reaction material;
(2) a hydrogenation reaction unit for contacting the pre-reaction material with a hydrogen-supplying agent to perform a hydrogenation reaction;
(3) a separation unit for separating the hydrogenation reaction material.

Preferably, said pre-reaction unit comprises a mixer, preferably one or more selected from the group consisting of a pipeline mixer, a liquid-liquid stirring mixer, a whirlpool mixer and a static mixer.

More preferably, the mixer comprises a closed feed hopper, a mixer body, a drive shaft assembly, a pulley mechanism and an electric motor; the mixer body comprises a stationary millstone fixed inside the mixer body and a movable millstone for cooperating with the stationary millstone; the movable millstone is connected with the drive shaft assembly, the pulley mechanism and the electric motor to provide a power source; the stationary millstone and the movable millstone are set to be corresponding in an one-by-one manner to form a group, preferably 1-7 groups, more preferably 2-4 groups are set sequentially in a longitudinal direction of the drive shaft assembly.

Preferably, the reaction unit comprises: one or more selected from the group consisting of a suspended bed reactor, an ebullated bed reactor, a fixed bed reactor, and a CSTR reactor, preferably a suspended bed reactor.

Preferably, the separation unit comprises one or more selected from the group consisting of a cyclone separator, a centrifuge separator, an extraction separator, a filtration separator and a sedimentation separator, preferably a cyclone separator.

Preferably, the system further comprises:
a dissolution unit for mixing the solid mixture obtained from the separation unit with a polar solvent capable of dissolving an alkali metal sulfide, so that the alkali metal sulfide is dissolved in the polar solvent;
an electrolysis unit for electrolyzing the alkali metal sulfide in an alkali metal sulfide-containing polar solvent obtained in the dissolution unit to generate an alkali metal and sulfur;
preferably, the individual unit is provided with a plurality of feed lines and discharge lines as required; more preferably, the system comprises: a sulfur-containing feedstock oil feed line, an alkali metal feed line, a mixer discharge line, a reactor outlet line for generated oil, a liquid product line, a solid mixture discharge line, a polar solvent feed line, a dissolution tank, a dissolved mixture discharge line, a metal or other solid component discharge line, an alkali metal sulfide-containing polar solvent discharge line, a sulfur discharge line and a recycled alkali metal feed line.

The invention provides an application of the system of the invention in the production of fuel oil.

The invention can achieve removal rates greater than 90% of sulfur and metal and the production of ultralow-sulfur marine fuel oil without the use of a catalyst. The overall technological process is simple, the carbon dioxide emission is relatively low, and the zero emission of sulfur oxides is achieved, thereby producing the significant economic and environmental benefits.

### BRIEF DESCRIPTION OF THE DRAWINGS

FIG. 1 illustrates a flow diagram of a method for producing fuel oil in the invention.
FIG. 2 illustrates a schematic diagram of a hermetic mixer used in the method for producing fuel oil according to the invention.

### DESCRIPTION OF THE REFERENCE SIGNS

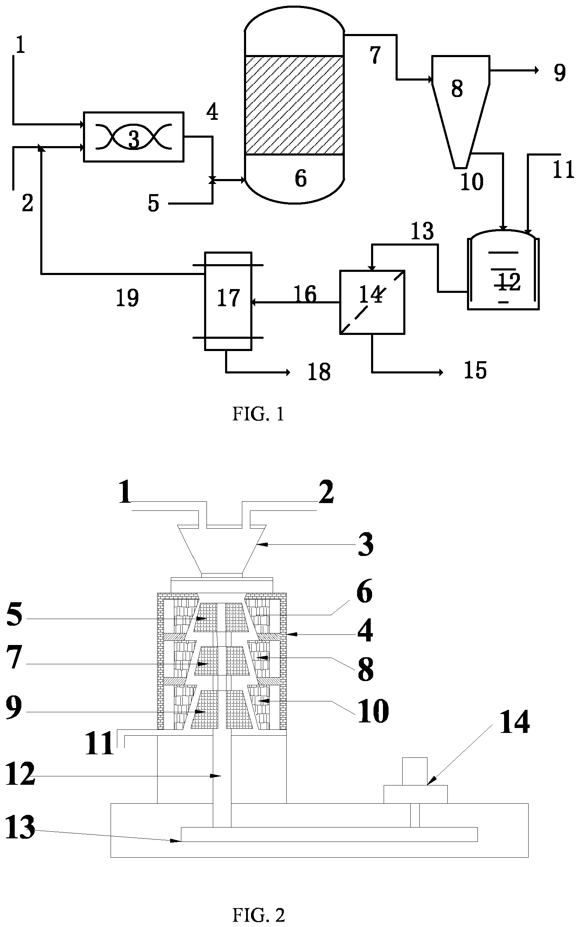

In FIG. 1:
1 denotes a sulfur-containing feedstock oil feed line;
2 denotes an alkali metal feed line;
3 denotes a mixer;
4 denotes a mixer discharge line;
5 denotes a hydrogen-supplying agent feed line;
6 denotes a hydrogenation reactor;
7 denotes a reactor outlet line for generated oil;
8 denotes a separator;
9 denotes a liquid product line;
10 denotes a separated solid mixture discharge line;
11 denotes a polar solvent feed line;
12 denotes a dissolution tank;
13 denotes a dissolved mixture discharge line;
14 denotes a filter;
15 denotes a metal or other solid component discharge line;
16 denotes an alkali metal sulfide-containing polar solvent discharge line;
17 denotes an electrolysis unit;
18 denotes a sulfur discharge line;
19 denotes a recycled alkali metal feed line.

In FIG. 2:
1 denotes a sulfur-containing feedstock oil feed line;
2 denotes an alkali metal feed line;
3 denotes a closed feed hopper;
4 denotes a mixer body;
5 denotes a first movable millstone;
6 denotes a first stationary millstone;
7 denotes a second movable millstone;
8 denotes a second stationary millstone;
9 denotes third movable millstone;
10 denotes third stationary millstone;
11 denotes a mixed material discharge line;
12 denotes a drive shaft assembly;
13 denotes a pulley mechanism;
14 denotes an electric motor.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

The invention provides a method for producing fuel oil, the method comprises the following steps:
(1) bringing a sulfur-containing feedstock oil and an alkali metal into contact for a pre-reaction to obtain a pre-reaction material, wherein the pre-reaction is performed under hydrogen-free conditions;
(2) contacting the pre-reaction material with a hydrogen-supplying agent to perform a hydrogenation reaction;
(3) separating the material obtained in step (2) to obtain a liquid-phase product fuel oil and a solid mixture.

The inventors have discovered through in-depth researches that although the alkali metal can hardly dispersed in the feedstock oil due to the different polarity of the alkali metal and the feedstock oil, even if the dispersion is forcibly performed, the inorganic phase of alkali metal tends to aggregate rapidly after placement, which separates from the organic phase of the feedstock oil, but the alkali metal is more easily dispersed in the feedstock oil than alkali metal sulfide after pre-reaction of the alkali metal and the feedstock oil, alkali metal sulfide, which is similar to an amphoteric surfactant, has both polarity and non-polarity, greatly facilitates dispersion of alkali metal in the feedstock oil, and maintains a stable dispersion state.

In view of the significant findings of the inventors in the researches, the invention proposes that blending a mixed raw materials consisting of a sulfur-containing feedstock oil and an alkali metal feedstock by passing through a mixer, especially under an elevated temperature, will cause a portion of the alkali metal to react with the sulfur in the feedstock to produce the inorganic compound alkali metal sulfide, which facilitates the variable mediation ability of the mixed materials, the generated alkali metal ions and the organic compounds form a stable cation-π interaction, promoting the dispersion of the inorganic compound alkali metal in the organic compound feedstock oil. Therefore, the invention can achieve removal rates greater than 90% of sulfur and metal and the production of fuel oils without the use of a catalyst. The overall technological process is simple, the carbon dioxide emission is relatively low, and the zero emission of sulfur oxides is achieved, thereby producing the significant economic and environmental benefits.

According to a preferred embodiment of the invention, the pre-reaction temperature is preferably within a range of 200°C-400°C, more preferably within a range of300°C-380°C; in the examples of the invention, 320°C is used as an example to formulate the advantages of the invention, but the protection scope of the invention is not limited thereby.

According to a preferred embodiment of the invention, the hydrogen-free conditions in step (1) refer to that a small amount of the hydrogen-supplying agent is added or not added in the pre-reaction process, a molar ratio of a hydrogen-supplying agent to an alkali metal is preferably less than 0.5. In this way, the carbon dioxide and sulfur oxide emissions can be reduced, and the fuel oil production can be efficiently achieved, thereby improving the economic and environmental benefits.

The invention does not impose a specific requirement on the form of providing an alkali metal, the conventional forms can be used in the invention. According to a preferred embodiment of the invention, it is preferred that the alkali metal in step (1) is provided in the form of a molten alkali metal.

The invention has no special requirements on the alkali metal types, the common types of alkali metal can be used in the invention. According to a preferred embodiment of the invention, the alkali metal in step (1) is preferably one or more selected from the group consisting of lithium, sodium, potassium, rubidium, cesium and francium, and more preferably lithium and sodium. In the examples of the invention, sodium is used as an example to illustrate the advantages of the invention, but it is not therefore limiting the protection scope of the invention.

According to a preferred embodiment of the invention, a mass ratio of the alkali metal in step (1) relative to sulfur in the sulfur-containing feedstock oil is 0.8-3.0:1, preferably 1-2.5:1, more preferably 1.1-1.4:1.

The invention does not impose a specific requirement on the sulfur-containing feedstock oil, the conventional feedstock oils can be used in the invention. According to a preferred embodiment of the invention, preferably, the sulfur-containing feedstock oil contains one or more of a carbon atom, heteroatoms and a heavy metal. Preferably, the heteroatoms comprise nitrogen and/or sulfur.

According to a preferred embodiment of the invention, preferably, the sulfur content in the sulfur-containing feedstock oil is 1.0 wt% or more, preferably 1.8-8.0 wt%, more preferably 2-3 wt%. The method of the invention is capable of treating high-sulfur feedstock oil. In the invention, the sulfur content is calculated based on the sulfur element, it is measured by using the X-ray fluorescence spectroscopy (refer to the national standard GBT 17040 of China).

According to a preferred embodiment of the invention, it is preferred that the sulfur-containing feedstock oil has a density of 950-1,000 kg/m³. The density of crude petroleum and liquid petroleum products in the invention is measured by using the hydrometer method (refer to the national standard GBT 1884A of China).

According to a preferred embodiment of the invention, it is preferred that the sulfur-containing feedstock oil has a heavy metal content within a range of 110-200 wppm. The heavy metal content of the oil in the invention is calculated based on the heavy metal element, the heavy metal content is measured by using the Inductively Coupled Plasma-Atomic Emission Spectroscopy (ICP-AES).

According to a preferred embodiment of the invention, the sulfur-containing feedstock oil preferably has a carbon residue content within a range of 5-15% (m/m). The carbon residue content of the oil in the invention is determined by oil analysis results, it is measured by the method of determining carbon residue in the petroleum products (micro method) (refer to the national standard GBT 17144 of China).

According to a preferred embodiment of the invention, it is preferred that the sulfur-containing feedstock oil has a viscosity within a range of 800-20,000 cSt. In the invention, the viscosity of oil is measured using a petroleum product kinematic viscosity determination method (refer to the national standard GBT 11137-50 of China).

According to a preferred embodiment of the invention, it is preferred that the sulfur-containing feedstock oil has a density within a range of 950-1,000 kg/m³, a heavy metal content within a range of 110-200 wppm, a carbon residue content within a range of 5-15 wt%, a viscosity within a range of 800-20,000 cSt, and a sulfur content of 1.0 wt.% or more, preferably within a range of 1.8-8.0 wt.%.

More preferably, according to one preferred embodiment of the invention, the feedstock oil is one or more selected from the group consisting of heavy residual oils, shale oil and oil sand oil.

It is further preferred according to one preferred embodiment of the invention that the heavy residual oils are one or more elected from the group consisting of atmospheric residual oils, vacuum residual oils, cracker residual oils, residual oil cracked diesel and catalytic diesel oil during the processing of crude oil.

The invention does not impose specific requirements on the device or equipment or vessels used in step (1), the customary types of device or equipment or vessels can be used in the invention. According to a preferred embodiment of the invention, preferably, the contact in step (1) is performed in a mixer, such that the highly homogeneous mixing of the reaction materials can be achieved, the reaction efficiency can be effectively increased. At the same time, a portion of the alkali metal will react with the sulfur in the feedstock to produce an inorganic compound alkali metal sulfide, thereby promoting the dispersion of inorganic compound alkali metal in the organic compound feedstock oil.

According to a preferred embodiment of the invention, the mixer is preferably one or more selected from the group consisting of a pipeline mixer, a liquid-liquid stirring mixer, a whirlpool mixer and a static mixer.

According to a preferred embodiment of the invention, it is preferred that the mixer comprises a closed feed hopper, a mixer body, a drive shaft assembly, a pulley mechanism and an electric motor; the mixer body comprises a stationary millstone fixed inside the mixer body and a movable millstone for cooperating with the stationary millstone; the movable millstone is connected with the drive shaft assembly, the pulley mechanism and the electric motor to provide a power source; the stationary millstone and the movable millstone are set to be corresponding in an one-by-one manner to form a group, preferably 1-7 groups, more preferably 2-4 groups are set sequentially in a longitudinal direction of the drive shaft assembly. In this way, a highly uniform mixing of the reaction materials can be achieved.

According to a preferred embodiment of the invention, it is more preferable that the mixing process in the mixer comprises: the sulfur-containing feedstock oil and the alkali metal source in the molten state enter a closed feed hopper from the top of said mixer, then access the mixer body, the stationary millstones are fixed on the mixer body and in a relatively static state; the electric motor provides power, and perform power transmission via the pulley mechanism, so that the drive shaft assembly starts to operate, in the meanwhile, the movable millstones drive the corresponding stationary millstones to rotate, such that the reactants are sufficiently blended during the flow process from the top to the bottom. The enhanced collision and contact of the alkali metal and sulfur in the feedstock is thereby achieved, the reaction efficiency can be effectively improved.

The invention does not impose the specific requirements on a hydrogen-supplying agent. Any of the ordinary types of hydrogen-supplying agent can be used in the invention.

According to a preferred embodiment of the invention, preferably, the hydrogen-supplying agent in step (2) is a substance containing at least one hydrogen atom, more preferably hydrogen gas and/or a substance containing at least one carbon atom and at least one hydrogen atom.

According to a preferred embodiment of the invention, preferably, the hydrogen-supplying agent is hydrogen gas and/or C1-C5 lower carbon hydrocarbons; more preferably, the lower carbon hydrocarbon is one or more selected from the group consisting of methane, ethane, propane, butane, pentane, ethylene, propylene, butylene, pentene and diene. According to the invention, hydrogen, ethane are used in the examples of the invention for exemplifying advantages of the invention, but the protection scope of the invention is not limited thereto.

According to a preferred embodiment of the invention, the used amount of hydrogen-supplying agent in step (2) is preferably within a range of 1.0-3.0 mole hydrogen/mole sulfur, more preferably within a range of 1.5-2.5 mole hydrogen/mole sulfur, calculated based on hydrogen gas. Therefore, the coking of the condensed ring compound and the like can be suppressed.

According to a preferred embodiment of the invention, it is preferred that the conditions of the hydrogenation reaction in step (2) comprise: an operating pressure within a range of 4.0-10.0 Mpa, preferably 6.0-8.0 Mpa.

According to a preferred embodiment of the invention, the conditions of the hydrogenation reaction in step (2) comprise: a reaction temperature within a range of 200°C-430°C, preferably 300°C-380°C, more preferably 365°C-380°C. An increased rate of reaction process can be hereby achieved.

According to a preferred embodiment of the invention, the step (2) is preferably performed in a reactor, the reactor is more preferably one or more selected from the group consisting of a suspended bed reactor, an ebullated bed reactor, a fixed bed reactor, and a CSTR (Continuous Stirred-Tank Reactor) reactor.

According to a preferred embodiment of the invention, the reactor is preferably a suspended bed reactor, the preferred operating conditions comprise: a reaction pressure within a range of 4.0-10.0 MPa, preferably 6.0-8.0 MPa; a reaction temperature within a range of 200-430°C, preferably 300-380°C, more preferably 365-380°C. A highly uniform mixing of the reaction mass is hereby achieved, in order to increase the reaction rate and improve the reaction efficiency during the process.

According to a preferred embodiment of the invention, preferably, the step (2) is performed in the presence of a catalyst, an active metal element of the catalyst comprise one or more of molybdenum, nickel and cobalt, the catalyst is preferably one or more selected from the group consisting of metallic molybdenum, metallic nickel, metallic cobalt, molybdenum alloy, nickel alloy, cobalt alloy, molybdenum oxide, nickel oxide and cobalt oxide.

According to the invention, it is preferred that the molybdenum alloy is a molybdenum alloy containing nickel and/or cobalt, the nickel alloy is a nickel alloy containing cobalt and/or molybdenum.

According to a preferred embodiment of the invention, preferably, the separating in step (3) is performed using one or more of cyclone separation, centrifuge separation, extraction separation, filtration separation and sedimentation separation; preferably cyclone separation; more preferably, the operating temperature of the cyclone separation is within a range of 150°C-380°C, preferably 200°C-330°C, more preferably 280°C-290°C. A clean separation of generated oil from other solid impurities such as sodium sulfide can be thereby achieved.

According to a preferred embodiment of the invention, the method preferably comprises: before the separating in step (3) is carried out, subjecting the material obtained in step (2) to a stabilization treatment under the hydrogenation reaction conditions for a stabilization period of 1-6h, preferably 2-3h. A polymeric crystallization of solids such as sodium sulfide is thereby achieved, which facilitates the separation of the subsequent operating units.

According to a preferred embodiment of the invention, the method preferably further comprises: a step (4) of mixing the solid mixture obtained in step (3) with a polar solvent capable of dissolving an alkali metal sulfide, the alkali metal sulfide in the solid mixture is dissolved in the polar solvent, thereby achieving separation of solids comprising metal sulfides and colloidal asphaltenes, increasing purity of the alkali metal sulfides, and providing a high purity feedstock for the subsequent alkali metal recovery unit.

The object of the invention can be achieved provided that the polar solvent satisfies the aforementioned requirements. According to a preferred embodiment of the invention, preferably, the polar solvent in step (4) is one or more selected from the group consisting of N,N-dimethylaniline, quinoline, 2-methyltetrahydrofuran, benzene, tetrahydrofuran, cyclohexane, fluorobenzene, trifluorobenzene, toluene, xylene, tetraethyleneglycol dimethyl ether, diglyme, isopropanol, ethylpropionaldehyde, dimethyl carbonate, dimethoxy ether, dimethyl propyleneurea, ethanol, ethyl acetate, propylene carbonate, ethylene carbonate and diethyl carbonate.

According to a preferred embodiment of the invention, it is preferred that the method further comprises: a step (5) of introducing the alkali metal sulfide-containing polar solvent obtained in said step (4) into an electrolysis unit, electrolyzing the alkali metal sulfide to produce an alkali metal and sulfur, and recycling the alkali metal as a raw material.

According to a preferred embodiment of the invention, the method preferably comprises the following steps:
(1) carrying out a pre-reaction of the sulfur-containing feedstock oil with an alkali metal in a mixer to obtain a pre-reaction material, the pre-reaction is performed under hydrogen-free conditions, the pre-reaction temperature is within a range of 200°C-400°C, preferably within a range of 300°C-380°C;
(2) contacting the pre-reaction material with a hydrogen-supplying agent to perform a hydrogenation reaction;
(3) separating the material obtained in step (2) to obtain a liquid-phase product fuel oil and a solid mixture;
(4) mixing the solid mixture obtained in step (3) with a polar solvent capable of dissolving an alkali metal sulfide, the alkali metal sulfide is dissolved in the polar solvent, thereby achieving separation of solids comprising metal sulfides and colloidal asphaltenes;
(5) introducing the alkali metal sulfide-containing polar solvent obtained in step (4) into an electrolysis unit, electrolyzing the alkali metal sulfide to generate an alkali metal and sulfur, and recycling the alkali metal as a raw material.

The invention provides a fuel oil produced with the method of the invention. The fuel oil of the invention has the characteristics of low-sulfur, low viscosity, low content of metal impurities; the method of the invention has the advantages of simple process flow, low production costs, relatively low emission of carbon dioxide and zero emission of sulfur oxides.

The invention provides an use of the method of the invention for the production of low-sulfur marine fuel oil. The method of the invention has the advantages of simple process flow, low production costs, relatively low emission of carbon dioxide and zero emission of sulfur oxides, thus the method is particularly suitable for the production of low-sulfur marine fuel oil.

The invention provides an use of the fuel oil according to the invention as the marine fuel oil. The fuel oil of the invention has the properties of low sulfur content, low content of metal impurities and low viscosity of the product, thus the fuel oil product is particularly suitable for use as the low-sulfur marine fuel oil.

The objects of the invention can be achieved by performing operations according to the aforementioned method, the invention does not impose a specific requirements on the device and equipment in use. According to a preferred embodiment of the invention, the invention also designs a continuous reaction system, which solves the conventional problems, for example, the batch-type stirred tank reactors cannot be operated continuously, the efficiency is low; and the continuous stirred tank reactors have the problem that the residence time of the materials can hardly be precisely controlled, thus some unreacted feedstock oil and alkali metal may flow out of the reactor, or some materials are retained in the reactor throughout the reaction process.

The invention provides a system for producing a fuel oil, the system comprising:
(1) a pre-reaction unit for bringing a sulfur-containing feedstock oil and an alkali metal into contact for a pre-reaction to obtain a pre-reaction material;
(2) a hydrogenation reaction unit for contacting the pre-reaction material with a hydrogen-supplying agent to perform a hydrogenation reaction;
(3) a separation unit for separating the hydrogenation reaction material.

According to the invention, it is preferable that the pre-reaction unit does not include a hydrogen supply line or a hydrogen supply feed port.

According to the invention, it is preferred that the pre-reaction unit comprises a mixer, preferably one or more selected from the group consisting of a pipeline mixer, a liquid-liquid stirring mixer, a whirlpool mixer and a static mixer. A mixer is used such that the reaction materials are mixed homogeneously, providing the basis for an efficient reaction.

According to the invention, it is more preferable that the mixer comprises a closed feed hopper, a mixer body, a drive shaft assembly, a pulley mechanism and an electric motor; the mixer body comprises a stationary millstone fixed inside the mixer body and a movable millstone for cooperating with the stationary millstone; the movable millstone is connected with the drive shaft assembly, the pulley mechanism and the electric motor to provide a power source; the stationary millstone and the movable millstone are set to be corresponding in an one-by-one manner to form a group, preferably 1-7 groups, more preferably 2-4 groups are set sequentially in a longitudinal direction of the drive shaft assembly. By using the aforementioned mixer, the reaction mass can be mixed with a high uniformity, the collision and contact between alkali metal with sulfur in the raw material is enhanced, the reaction efficiency is effectively improved.

According to the invention, the reactor of the reaction unit is not particularly defined, and preferably, the reaction unit comprises: one or more selected from the group consisting of a suspended bed reactor, an ebullated bed reactor, a fixed bed reactor and a CSTR reactor, preferably a suspended bed reactor.

According to the invention, the separators of the separation unit are not specifically defined; according to the invention, the separation unit preferably comprises one or more selected from the group consisting of a cyclone separator, a centrifuge separator, an extraction separator, a filtration separator and a sedimentation separator, preferably a cyclone separator.

According to the invention, it is preferred that the system further comprises a dissolution unit for mixing the solid mixture obtained from the separation unit with a polar solvent capable of dissolving an alkali metal sulfide, so that the alkali metal sulfide is dissolved in the polar solvent; an electrolysis unit for electrolyzing the alkali metal sulfide in an alkali metal sulfide-containing polar solvent obtained in the dissolution unit to generate an alkali metal and sulfur.

Preferably, the individual unit is provided with a plurality of feed lines and discharge lines as required; more preferably, the system comprises: a sulfur-containing feedstock oil feed line, an alkali metal feed line, a mixer discharge line, a reactor outlet line for generated oil, a liquid product line, a solid mixture discharge line, a polar solvent feed line, a dissolution tank, a dissolved mixture discharge line, a metal or other solid component discharge line, an alkali metal sulfide-containing polar solvent discharge line, a sulfur discharge line and a recycled alkali metal feed line.

As shown in FIG. 1, according to a preferred embodiment of the invention, the pre-reaction unit comprises: a mixer 3, a sulfur-containing feedstock oil feed line 1, an alkali metal feed line 2, and a mixer discharge line 4.

According to a preferred embodiment of the invention, the reaction unit comprises a hydrogenation reactor 6, a hydrogen-supplying agent feed line 5, and a reactor outlet line for generated oil 7.

According to a preferred embodiment of the invention, the separation unit comprises a separator 8, a liquid product line 9, a separated solid mixture discharge line 10.

According to a preferred embodiment of the invention, the dissolution unit comprises: a dissolution tank 12, a polar solvent feed line 11, and a dissolved mixture discharge line 13.

In accordance with a preferred embodiment of the invention, the system comprises: a filter 14, a metal or other solid component discharge line 15, an alkali metal sulfide-containing polar solvent discharge line 16.

According to a preferred embodiment of the invention, the electrolysis unit 17 comprises: a sulfur discharge line 18, and a recycled alkali metal feed line 19.

The method for producing a low-sulfur marine fuel oil of the invention comprises the following content:
(1) subjecting a feedstock oil and an alkali metal to a pre-reaction in a mixer under hydrogen-free conditions, the pre-reaction temperature is within a range of 200°C-400°C, preferably within a range of 300°C-380°C, further preferably within a range of 335°C-365°C;
(2) feeding the reacted materials obtained in step (1) into a reactor, and carrying out the deep desulfurization reaction under the action of a hydrogen-supplying agent;
(3) separating the materials obtained in step (2) to obtain a liquid-phase product low-sulfur marine fuel oil and a solid mixture.

In the method of the invention, the feedstock oil in step (1) is subjected to a pre-reaction in a mixer with an alkali metal in a molten state.

In the method of the invention, the feedstock oil of step (1) contains one or more of a carbon atom, heteroatoms and/or one or more heavy metals.

In the method of the invention, the feedstock oil of step (1) is one or more selected from the group consisting of heavy residual oils, shale oil and oil sand oil, it generally has a sulfur content of 1.0wt% or more, preferably 1.8-8.0 wt%. The raw materials of heavy residual oils are one or more elected from the group consisting of atmospheric residual oils, vacuum residual oils, cracker residual oils, residual oil cracked diesel and catalytic diesel oil during the processing of crude oil.

In the method of the invention, the hydrogen-free condition in step (1) refers to that a hydrogen-supplying agent is not added (e.g., the hydrogen gas is not introduced) during the pre-reaction process.

In the method of the invention, the alkali metal in step (1) is one or more of Lithium (Li), Sodium (Na), Potassium (K), Rubidium (Rb), Cesium (Cs) and Francium (Fr).

In the method of the invention, the ratio of the oil feedstock to the alkali metal in step (1) is determined based on the sulfur content of the feedstock oil, a mass ratio of the added amount of alkali metal to the sulfur content of the feedstock oil is within a range of 0.8-3.0:1, preferably within a range of 1.2-2.5:1.

In the method of the invention, the operating pressure of the pre-reaction in step (1) may be atmospheric pressure, or may be the operating pressure of a subsequent operating unit, preferably atmospheric pressure.

In the method of the invention, the mixer of step (1) is one or more selected from the group consisting of a pipeline mixer, a liquid-liquid stirring mixer, a whirlpool mixer and a static mixer.

In the method of the invention, an alkali metal salt is added to the mixer as required in some embodiments, wherein the alkali metal salt is one or more of lithium sulfide, sodium sulfide, potassium sulfide, rubidium sulfide, cesium sulfide, francium sulfide; the alkali metal salt is typically added in an amount of 1-20 wt.%, preferably 5-8 wt.% of the feedstock. The addition of the alkali metal salt can improve the dispersing performance of the alkali metal in the feedstock oil, and maintain a stable dispersion state.

A mixer used in embodiments of the invention may be provided with the following structure: the mixer mainly comprises a closed feed hopper, a mixer body, a drive shaft assembly, a pulley mechanism and an electric motor; the mixer body comprises a stationary millstone fixed inside the mixer body and a movable millstone for cooperating with the stationary millstone; the movable millstone is connected with the drive shaft assembly, the pulley mechanism and the electric motor to provide a power source; the stationary millstone and the movable millstone are set to be corresponding in an one-by-one manner to form a group; 1-7 groups, more preferably 2-4 groups may be set sequentially in a longitudinal direction of the drive shaft assembly as required.

The mixing process of a mixer employed in the examples of the invention is as follows: the heavy residual oils and the alkali metal in the molten state enter a closed feed hopper from the top of said hermetic mixer, then access the mixer body, the stationary millstones are fixed on the mixer body and in a relatively static state; the electric motor provides power, and perform power transmission via the pulley mechanism, so that the drive shaft assembly starts to operate, in the meanwhile, the movable millstones drive the corresponding stationary millstones to rotate, such that the reactants are sufficiently blended during the flow process from the top to the bottom. The hermetic mixer of the invention achieves highly uniform mixing of the reaction mass through the high-speed meshing and grinding of the stationary millstones and movable millstones, thereby enhancing the collision and contact between alkali metal and sulfur in the feed, and effectively increasing the reaction efficiency.

In the method of the invention, the hydrogen-supplying agent in step (2) is a substance containing at least one hydrogen atom, preferably hydrogen gas and/or a substance containing at least one carbon atom and at least one hydrogen atom.

In the method of the invention, the hydrogen-supplying agent is hydrogen gas and/or lower carbon hydrocarbons, wherein the lower carbon hydrocarbon is methane, ethane, propane, butane, pentane, ethylene, propylene, butylene, pentene, diene, isomers of the aforementioned substance and/or a mixture thereof.

In the method of the invention, the used amount of hydrogen-supplying agent in step (2) is determined based on the sulfur content of the heavy residual oils, it is typically within a range of 1.0-3.0 mole hydrogen/mole sulfur, preferably within a range of 1.5-2.5 mole hydrogen/mole sulfur, calculated based on hydrogen gas.

In the method of the invention, an operating pressure of the reactor in step (2) is generally within a range of 4.0-10.0Mpa, preferably 6.0-8.0Mpa; and the reaction temperature is typically within a range of 200°C-430°C, preferably 300°C-380°C.

In the method of the invention, the reactor described in step (2) is one or more selected from the group consisting of a suspended bed reactor, an ebullated bed reactor, a fixed bed reactor, and a CSTR reactor.

In some embodiments of the method of the invention, the reaction process of step (2) may be performed in the presence of a catalyst to expedite the chemical reaction. As a non-limiting example, the catalyst may comprise molybdenum, nickel, cobalt, or molybdenum alloys, nickel alloys, cobalt alloys, molybdenum alloys containing nickel and/or cobalt, nickel alloys containing cobalt and/or molybdenum, molybdenum oxide, nickel oxide or cobalt oxide, and a combination thereof.

The reactor used in one or more examples of the invention is a suspended bed reactor, the operating conditions are as follows: the reaction pressure is generally within a range of 4.0-10.0MPa, preferably within a range of 6.0-8.0MPa, and the reaction temperature is typically within a range of 200-430°C, preferably within a range of 300-380°C. The use of a suspended bed reactor substantially exploits the highly back-mixing characteristics of the reactor to maintain uniform blending of hydrogen gas and reaction mixture feedstock during the reaction, and enhance mass transfer and improve reaction efficiency while reducing the coking probability of heavy residual oils feedstock. The combination of a hermetic mixer with a suspended bed reactor achieves highly uniform mixing of heavy residual oils feedstock with an alkali metal in the molten state, improves utilization rate of the alkali metal, reduces the used amount of alkali metal under the condition of the same handling capacity, thereby lowering the difficulty of treating the insufficiently reacted metal in the subsequent product; since there is no catalyst bed layer in the suspended bed reactor, the internal circulating flow within the reactor can enhance uniform contact of hydrogen gas with the highly mixed heavy residual oils feedstock and the alkali metal mixture feedstock, thereby fulfilling the purpose of enhancing gas-liquid mass transfer, improving efficiency of desulfurization and demetallization, and suppressing the coking process, and achieves a dual improvement in product yield and quality.

In the method of the invention, the separation in step (3) may be by one or more of cyclone separation, centrifuge separation, extraction separation, filtration separation and sedimentation separation.

In the method of the invention, the reaction mass obtained in step (2) is preferably subjected to a stabilization treatment prior to the separation, the operation conditions of stabilization treatment are consistent with the operation conditions of suspended bed reactor of step (2), the stabilization time is generally within a range of 1- 6h, preferably 2-3h.

One or more embodiments of the invention utilize a cyclone separation, wherein the cyclone separator is a well-known cyclone separator having both cyclone and separation functions. The operating temperature of the cyclone separation is typically within a range of 150°C-380°C, preferably 200°C-330°C.

The method of the invention may further comprise a step (4), in which the solid mixture obtained in step (3) is mixed with a polar solvent a polar solvent capable of dissolving an alkali metal sulfide, the alkali metal sulfide can be dissolved in the polar solvent, so as to perform separation from other solids such as metals.

In the method of the invention, the polar solvent in step (4) is one or more selected from the group consisting of N,N-dimethylaniline, quinoline, 2-methyltetrahydrofuran, benzene, tetrahydrofuran, cyclohexane, fluorobenzene, trifluorobenzene, toluene, xylene, tetraethyleneglycol dimethyl ether, diglyme, isopropanol, ethylpropionaldehyde, dimethyl carbonate, dimethoxy ether, dimethyl propyleneurea, ethanol, ethyl acetate, propylene carbonate, ethylene carbonate and diethyl carbonate. The polar solvent may be a solvent selected from said solvents, or a mixture thereof.

In the method of the invention, the separation operation described in step (4) is a filtration operation well known among those skilled in the art, it simply separates the solution of dissolved alkali metal sulfide from solid matter such as metals.

The method of the invention may further comprise a step (5) of introducing the alkali metal sulfide-containing polar solvent obtained in said step (4) into an electrolysis unit, electrolyzing the alkali metal sulfide to produce an alkali metal and sulfur, and recycling the alkali metal.

In the method of the invention, the electrolysis unit described in step (5) has an alkali ion-conducting membrane configured to selectively transport alkali ions, the membrane separates an anolyte compartment configured with an anode from a catholyte compartment configured with a cathode. The step (4) comprises using a solution consisting of alkali metal sulfides and/or polysulfides, and a polar solvent partially dissolving elemental sulfur, alkali metal sulfides and polysulfides as an anlyte solution, and introducing the anlyte solution into the anolyte compartment. The catholyte solution is introduced into the catholyte compartment. The catholyte solution comprises alkali metal ions and a catholyte solvent. The catholyte solvent may comprise one of a plurality of non-aqueous solvents, such as tetraethylene glycol dimethyl ether, diethylene glycol dimethyl ether, dimethyl carbonate, dimethoxy ethers, propylene carbonate, ethylene carbonate, diethyl carbonate. An electric current is applied to the sulfides and/or polysulfides in the anolyte compartment of the electrolysis unit to form polysulfides with higher valence and to oxidize the polysulfides with high valence to elemental sulfur. The electric current further enables the alkali metal ions to pass through the alkali metal conducting membrane and flow from the anolyte compartment to the catholyte compartment, and reduce the alkali metal ions in the catholyte compartment to form elemental alkali metal. The elemental alkali metal is recycled.

In the method of the invention, the operating temperature of the electrolysis unit of step (5) is determined based on the selected type of electrolytic tank, it is generally within a range of 100°C-600°C, the electrolytic tank with a low operating temperature is preferred. Preferably, the operating temperature of the electrolytic tank is within a range of 100°C-200°C.

A method of producing low-sulfur marine fuel oil comprises the following content:
(1) subjecting a feedstock oil and an alkali metal to a pre-reaction in a mixer under hydrogen-free conditions, the pre-reaction temperature is within a range of 200°C-400°C, preferably within a range of 300°C-380°C, further preferably within a range of 335°C-365°C;
(2) feeding the reacted materials obtained in step (1) into a reactor, and carrying out the deep desulfurization reaction under the action of a hydrogen-supplying agent;
(3) separating the materials obtained in step (2) to obtain a liquid-phase product low-sulfur marine fuel oil and a solid mixture;
(4) mixing the solid mixture obtained in step (3) with a polar solvent capable of dissolving an alkali metal sulfide, the alkali metal sulfide can be dissolved in the polar solvent, thereby achieving separation from other solids such as metals;
(5) introducing a solvent of the alkali metal sulfide-containing polar solvent obtained in said step (4) into an electrolysis unit, electrolyzing the alkali metal sulfide to produce an alkali metal and sulfur, and recycling the alkali metal.

The method of the invention is described in detail below with reference to the accompanying drawings.

According to a preferred embodiment of the invention, the invention is specified in detail below with reference to the accompanying drawings:

The feedstock oil is heavy residual oils, the alkali metal is an alkali metal in a molten state, the reactor is a suspended bed reactor, the separator is a cyclone separator/centrifugal separator, and the dissolution unit comprises a dissolution tank.

As shown in FIG. 1, the method comprises: the heavy residual oils are initially sufficiently mixed with an alkali metal in a hermetic mixer 3 to carry out a pre-reaction, the pre-return material is pressurized and enter into a suspended bed reactor 6 along with a hydrogen-supplying agent (e.g., hydrogen gas), the hydrodesulfurization and hydrodemetallization reactions are sufficiently performed in the suspended bed reactor 6; the reacted materials obtained therefrom comprise a liquid-phase generated oil, a solid-phase alkali metal sulfide solid matter and metal; after the stabilization treatment, the materials are introduced into a cyclone separator 8 for separation, so as to obtain a liquid-phase product low-sulfur marine fuel oil and a solid mixture; the obtained solid mixture is blended with a polar solvent capable of dissolving an alkali metal sulfide and the mixture is dissolved in a dissolution tank 12, the dissolved mixed materials are introduced into a filtration unit 14 for separation to obtain a polar solvent containing alkali metal sulfide and other solid components (e.g., metals); the polar solvent containing alkali metal sulfide is introduced into an electrolysis unit 17 for electrolyzing the alkali metal sulfide to generate an alkali metal and sulfur, the alkali metal generated from the electrolysis is recycled.

As shown in FIG. 2, the steps of pre-reaction that occur in the mixer comprise:
The heavy residual oils feedstock flows from a feedstock oil feed line 1, and the alkali metal in molten form flows from an alkali metal feed line 2, both the heavy residual oils feedstock and the alkali metal in molten form enter a closed feed hopper 3 from the top of a hermetic mixer, then enter a mixer body 4, a first stationary millstone 6, a second stationary millstone 8; a third stationary millstone 10 is fixed on a mixer body 4 and in a relatively stationary state; an electric motor 14 provides power, and performs a power transmission via a pulley mechanism 13, such that a drive shaft assembly 12 starts to operate, in the meanwhile, a first movable millstone 5, a second movable millstone 7 and a second movable millstone 9 drive the corresponding first stationary millstone, the second stationary millstone and the third stationary millstone to rotate, the reaction mass is sufficiently mixed during a flow process from the top to the bottom, and exits from a mixed material discharge line 11.

A method for producing low-sulfur marine fuel oil in accordance with the invention will be further described by means of the specific examples. The examples merely exemplify the specific embodiments in the method of the invention, instead of limiting the protection scope of the invention.

### Example 1

The method was performed according to the technological process illustrated in FIG. 1 (the following Examples used the same technological process), heavy residual oil 1 (the properties were shown in Table 1, and were identical hereinafter) at a flow rate of 1,000 g/h was first mixed sufficiently with sodium metal in the molten state at a flow rate of 22.60 g/h in a hermetic mixer (as shown in FIG. 2, same as in the Examples below), and performed a pre-reaction, the pre-reaction materials were pressurized and introduced into a suspended bed reactor along with hydrogen gas at a flow rate of 1.28 mol/h, the hydrodesulfurization and hydrodemetallization reactions were sufficiently performed; the reacted materials obtained therefrom were subjected to a stabilization treatment, and introduced into a cyclone separator for separation, so as to obtain a liquid phase product low-sulfur marine fuel oil and a solid mixture.

### Example 2

The heavy residual oil 1 at a flow rate of 1,000 g/h was first mixed sufficiently with sodium metal in the molten state at a flow rate of 22.60 g/h in a hermetic mixer, and performed a pre-reaction, the pre-reaction materials were pressurized and introduced into a suspended bed reactor along with hydrogen gas at a flow rate of 1.28 mol/h, the hydrodesulfurization and hydrodemetallization reactions were sufficiently performed; the reacted materials obtained therefrom were subjected to a stabilization treatment, and introduced into a centrifuge separator for separation, so as to obtain a liquid phase product low-sulfur marine fuel oil and a solid mixture.

### Example 3

The heavy residual oil 1 at a flow rate of 1,000 g/h was first mixed sufficiently with sodium metal in the molten state at a flow rate of 24.60 g/h in a hermetic mixer, and performed a pre-reaction, the pre-reaction materials were pressurized and introduced into an ebullated bed reactor along with hydrogen gas at a flow rate of 1.28 mol/h, the hydrodesulfurization and hydrodemetallization reactions were sufficiently performed; the reacted materials obtained therefrom were subjected to a stabilization treatment, and introduced into a cyclone separator for separation, so as to obtain a liquid phase product low-sulfur marine fuel oil and a solid mixture.

### Example 4

The heavy residual oil 1 at a flow rate of 1,000 g/h was first mixed sufficiently with sodium metal in the molten state at a flow rate of 24.60 g/h in a hermetic mixer, and performed a pre-reaction, the pre-reaction materials were pressurized and introduced into a stirred tank reactor along with hydrogen gas at a flow rate of 1.28 mol/h, the hydrodesulfurization and hydrodemetallization reactions were sufficiently performed; the reacted materials obtained therefrom were subjected to a stabilization treatment, and introduced into a cyclone separator for separation, so as to obtain a liquid phase product low-sulfur marine fuel oil and a solid mixture.

### Example 5

The heavy residual oil 1 at a flow rate of 1,000 g/h was first mixed sufficiently with sodium metal in the molten state at a flow rate of 22.60 g/h and sodium sulfide at a flow rate of 10 g/h in a hermetic mixer, and performed a pre-reaction, the pre-reaction materials were pressurized and introduced into a suspended bed reactor along with hydrogen gas at a flow rate of 1.28 mol/h, the hydrodesulfurization and hydrodemetallization reactions were sufficiently performed; the reacted materials obtained therefrom were subjected to a stabilization treatment, and introduced into a cyclone separator for separation, so as to obtain a liquid phase product low-sulfur marine fuel oil and a solid mixture.

### Example 6

The heavy residual oil 1 at a flow rate of 1,000 g/h was first mixed sufficiently with sodium metal in the molten state at a flow rate of 24.60 g/h in a hermetic mixer, and performed a pre-reaction, the pre-reaction materials were pressurized and introduced into a suspended reactor along with ethane at a flow rate of 1.28 mol/h, the hydrodesulfurization and hydrodemetallization reactions were sufficiently performed; the reacted materials obtained therefrom were subjected to a stabilization treatment, and introduced into a cyclone separator for separation, so as to obtain a liquid phase product low-sulfur marine fuel oil and a solid mixture.

### Example 7

The heavy residual oil 2 at a flow rate of 1,000 g/h was first mixed sufficiently with sodium metal in the molten state at a flow rate of 41.60 g/h in a hermetic mixer, and performed a pre-reaction, the pre-reaction materials were pressurized and introduced into a suspended reactor along with hydrogen gas at a flow rate of 1.625 mol/h, the hydrodesulfurization and hydrodemetallization reactions were sufficiently performed; the reacted materials obtained therefrom were subjected to a stabilization treatment, and introduced into a cyclone separator for separation, so as to obtain a liquid phase product low-sulfur marine fuel oil and a solid mixture. The mixed materials dissolved by the polar solvent xylene were introduced into a filtration unit for separation to obtain an alkali metal sulfide-containing polar solvent and other solid components (e.g., metal). The solvent containing an alkali metal sulfide was introduced into an electrolysis unit, the alkali metal sulfide was electrolyzed to produce an alkali metal and sulfur. The alkali metal generated from the electrolysis process was recycled.

### Example 8

The method was performed according to the method of Example 1, except that the hermetic mixer was replaced with a conventional mixer, which was a mixer provided with a stirring paddle at a stirring rate of 70rpm.

### Example 9

The method was performed according to the method of Example 1, except that in the hermetic mixer, the temperature of the pre-reaction was 200°C.

### Example 10

The method was performed according to the method of Example 1, except that in the hermetic mixer, the temperature of the pre-reaction was 400°C.

### Example 11

The method was performed according to the method of Example 1, except that in the hermetic mixer, the temperature of the pre-reaction was 350°C, and the hydrogen-supplying agent was ethylene.

### Example 12

The method was performed according to the method of Example 1, except that in the hermetic mixer, the temperature of the pre-reaction was 370°C, and the hydrogen-supplying agent was butene.

### Example 13

The method was performed according to the method of Example 1, except that hydrogenation reaction was stabilized at a hydrogenation temperature of 370°C for 3h, and the rotational separation was then carried out, the remaining conditions were the same.

### Example 14

The method was performed according to the method of Example 1, except that the mass ratio of alkali metal sodium to sulfur in the sulfur-containing feedstock oil was 2.5:1.

### Example 15

The method was performed according to the method of Example 1, except that the mass ratio of alkali metal sodium to sulfur in the sulfur-containing feedstock oil was 0.8:1.

### Example 16

The method was performed according to the method of Example 1, except that the step (2) was carried out in the presence of metallic molybdenum, and the used amount of catalyst was 45ml.

It was discovered by comparing Example 16 and Example 1 that the method of the invention can be used for producing the marine fuel oil with excellent properties by performing the hydrogenation reaction of step (2) with or without a catalyst.

### Comparative Example 1

The heavy residual oil 1 at a flow rate of 1,000 g/h and sodium metal mixed material in the molten state at a flow rate of 26.70g/h along with hydrogen gas at a flow rate of 1.28mol/h were jointly fed into a stirred tank reactor, the hydrodesulfurization and hydrodemetallization reactions were performed; the reacted materials obtained therefrom were subjected to a stabilization treatment, and introduced into a centrifuge separator for separation, so as to obtain a liquid phase product low-sulfur marine fuel oil and a solid mixture.

### Comparative Example 2

The heavy residual oil 2 at a flow rate of 1,000 g/h and sodium metal mixed material in the molten state at a flow rate of 41.60g/h along with hydrogen gas at a flow rate of 1.28mol/h were jointly fed into a stirred tank reactor, the hydrodesulfurization and hydrodemetallization reactions were performed; the reacted materials obtained therefrom were subjected to a stabilization treatment, and introduced into a centrifuge separator for separation, so as to obtain a liquid phase product low-sulfur marine fuel oil and a solid mixture; the mixed materials dissolved by a polar solvent were introduced into a filtration unit for separation to obtain an alkali metal sulfide-containing polar solvent and other solid components (e.g., metal). The solvent containing an alkali metal sulfide was introduced into an electrolysis unit, the alkali metal sulfide was electrolyzed to produce an alkali metal and sulfur. The alkali metal generated from the electrolysis process was recycled.

The properties of feedstock used in Examples 1-7 and Comparative Examples 1-2 were shown in Table 1; the operating conditions of Examples 1-6 and Comparative Example 1 were illustrated in Table 2; the product properties of Examples 1-6 and Comparative Example 1 were shown in Table 3; the operating conditions of Example 7 and Comparative Example 2 were displayed in Table 4; the product properties of Example 7 and Comparative Example 2 were illustrated in Table 5; the results of Examples 8-16 were displayed in Table 6.

**Table 1 The properties of feedstock oil**

| | Heavy residual oil 1 | Heavy residual oil 2 |
|---|---|---|
| Viscosity and carbon residue value | 12.5 | 6.9 |
| Density/ kg/m³ | 997.5 | 989.3 |
| Carbon residue/ % | 8.4 | 7.8 |
| Sulfur content/ wt% | 2.05 | 2.6 |
| Heavy metal content/ wppm | 132 | 116 |
| Na/ wppm | 58 | 20 |
| Viscosity/ cSt@50°C | 823 | 10005 |

**Table 2 Operating conditions of Examples 1-6 and Comparative**

| Example 1 | | | | | | | |
|---|---|---|---|---|---|---|---|
| | Exampl e 1 | Exampl e 2 | Examp le 3 | Examp le 4 | Exampl e 5 | Exampl e 6 | Compara tive Example 1 |
| Feedstock | Feedsto ck 1 | Feedsto ck 1 | Feedst ock 1 | Feedst ock 1 | Feedsto ck 1 | Feedsto ck 1 | Feedstoc k 1 |
| Hermetic mixer | | | | | | | |
| Operating | Ordinar | Ordinar y | Ordina ry | Ordina ry | Ordinar | Ordinar | -- |
| pressure/ MPa | y pressur e | pressur e | pressur e | pressur e | y pressur e | y pressur e | |
| Operating temperatur e/ °C | 320 | 320 | 320 | 320 | 320 | 320 | -- |
| Ratio of alkali metal amount to the sulfur content in feedstock | 1.1 | 1.1 | 1.2 | 1.2 | 1.1 | 1.2 | 1.4 |
| Ratio of hydrogen-supplying agent to sulfur content in feedstock, mole hydrogen/ mole sulfur | 1.5 | 1.5 | 1.5 | 1.5 | 2.0 | 2.0 | 1.5 |
| Reactors | Suspen ded bed | Suspen ded bed | Ebullat ed bed | Stirred tank | Suspen ded bed | Suspen ded bed | Stirred tank |
| Hydrogen partial pressure/ MPa | 7.0 | 6.0 | 7.0 | 7.0 | 6.0 | 6.0 | 7.0 |
| Reaction temperatur e/ °C | 370 | 380 | 365 | 375 | 370 | 365 | 375 |
| Cyclone separator | | | | | | | |
| Pressure/ MPa | 0.6 | 0.6 | 0.6 | 0.6 | 0.6 | 0.6 | 0.6 |
| Temperatur e/°C | 280 | 280 | 280 | 280 | 280 | 280 | 280 |

**Table 3 Results of Examples 1-6 and Comparative Example 1**

| | Exampl e1 | Exampl e2 | Exampl e3 | Exampl e4 | Exampl e5 | Exampl e6 | Comparati ve Example 1 |
|---|---|---|---|---|---|---|---|
| API degree | 19.7 | 19.8 | 19.4 | 20.3 | 20.4 | 19.4 | 17.9 |
| Carbon residue/ % | 1.61 | 1.43 | 1.63 | 1.65 | 1.27 | 1.45 | 1.9 |
| Sulfur content/ wt% | 0.055 | 0.045 | 0.058 | 0.061 | 0.032 | 0.048 | 0.10 |
| Heavy metal content/ wppm | 1 | <1 | <1 | <1 | <1 | <1 | 5 |
| Na/ wppm | 46 | 42 | 47 | 49 | 36 | 42 | 49 |
| Viscosity / cSt@50 °C | 246 | 239 | 249 | 250 | 217 | 242 | 265 |

As illustrated by the results of Table 3, the API degree of the product obtained with the method of the invention is obviously improved, and the method can effectively reduce the sulfur content, metal content, viscosity and carbon residue content of generated oil, and allow the direct production of low-sulfur marine fuel oils meeting the ISO 8217 2010 RMG 380 standard.

**Table 4 Operating conditions of Example 7 and Comparative**

| Example 2 | | |
|---|---|---|
| | Example 7 | Comparative Example 2 |
| Feedstock | Feedstock 2 | Feedstock 2 |
| Hermetic mixer | | |
| Operating pressure/ MPa | Ordinary pressure | -- |
| Operating temperature/ °C | 320 | -- |
| Ratio of alkali metal amount to the sulfur content in feedstock | 1.6 | 1.6 |
| Reactors | Suspended bed | Stirred tank |
| Hydrogen partial pressure/ MPa | 7.0 | 7.0 |
| Reaction temperature/ °C | 368 | 378 |
| Cyclone separator | | |
| Pressure/ MPa | 0.55 | 0.55 |
| Temperature/°C | 290 | 290 |

**Table 5 Results of Example 7 and Comparative Example 2**

| | Example 7 | Comparative Example 2 |
|---|---|---|
| API degree | 19.8 | 13.8 |
| Carbon residue/ % | 1.44 | 4.2 |
| Sulfur content/ wt% | 0.048 | 0.11 |
| Heavy metal content/ wppm | <1 | 7 |
| Na/ wppm | 25 | 24 |
| Viscosity/ | 222 | 508 |
| cSt@50°C | | |

As can be seen from the results of Table 5, the method of the invention can still maintain high quality upgrading effect after the alkali metal recovery, the generated oil has a low sulfur content, metal content, viscosity and carbon residue value.

**Table 6**

| Examples | 8 | 9 | 10 | 11 | 12 | 13 | 14 | 15 | 16 |
|---|---|---|---|---|---|---|---|---|---|
| API degree | 18.5 | 18.0 | 18.3 | 19.6 | 19.8 | 19.9 | 19.2 | 19.0 | 19.8 |
| Carbon residue/ % | 1.92 | 1.98 | 1.94 | 1.63 | 1.61 | 1.59 | 1.64 | 1.69 | 1.60 |
| Sulfur content/ wt% | 0.073 | 0.079 | 0.075 | 0.058 | 0.054 | 0.048 | 0.061 | 0.065 | 0.053 |
| Heavy metal content/ wppm | 3 | 6 | 4 | 2 | 1 | 0 | 3 | 5 | 1 |
| Na/ wppm | 66 | 70 | 68 | 49 | 45 | 37 | 49 | 50 | 44 |
| Viscosity/ cSt@50°C | 305 | 325 | 313 | 251 | 244 | 223 | 252 | 255 | 242 |

The above content describes in detail the preferred embodiments of the invention, but the invention is not limited thereto. A variety of simple modifications can be made in regard to the technical solutions of the invention within the scope of the technical concept of the invention, including a combination of individual technical features in any other suitable manner, such simple modifications and combinations thereof shall also be regarded as the content disclosed by the invention, each of them falls into the protection scope of the invention.

## Claims

1. A method for producing fuel oil, it is **characterized in that** the method comprises the following steps:
(1) bringing a sulfur-containing feedstock oil and an alkali metal into contact for a pre-reaction to obtain a pre-reaction material, wherein the pre-reaction is performed under hydrogen-free conditions;
(2) contacting the pre-reaction material with a hydrogen-supplying agent to perform a hydrogenation reaction;
(3) separating the material obtained in step (2) to obtain a liquid-phase product fuel oil and a solid mixture.

2. The method according to claim 1, wherein
the pre-reaction temperature in step (1) is within a range of 200°C-400°C, more preferably 300°C-380°C; and/or
the alkali metal in step (1) is provided in the form of a molten alkali metal; and/or
the alkali metal in step (1) is one or more selected from the group consisting of lithium, sodium, potassium, rubidium, cesium and francium; and/or
a mass ratio of the alkali metal in step (1) relative to sulfur in the sulfur-containing feedstock oil is 0.8-3.0:1, preferably 1-2.5:1, more preferably 1.1-1.4:1; and/or
the sulfur content in the sulfur-containing feedstock oil is 1.0 wt% or more, preferably 1.8-8.0 wt%, more preferably 2-3 wt%;
it is preferable that the sulfur-containing feedstock oil has a density within a range of 950-1,000 kg/m³, and/or a heavy metal content within a range of 110-200 wppm, and/or a carbon residue content within a range of 5-15 wt%, and/or a viscosity within a range of 800-20,000 cSt.

3. The method according to claim 1 or 2, wherein
the contact in step (1) is performed in a mixer;
preferably, the mixer is one or more selected from the group consisting of a pipeline mixer, a liquid-liquid stirring mixer, a whirlpool mixer and a static mixer;
preferably, the mixer comprises a closed feed hopper, a mixer body, a drive shaft assembly, a pulley mechanism and an electric motor; the mixer body comprises a stationary millstone fixed inside the mixer body and a movable millstone for cooperating with the stationary millstone; the movable millstone is connected with the drive shaft assembly, the pulley mechanism and the electric motor to provide a power source; the stationary millstone and the movable millstone are set to be corresponding in an one-by-one manner to form a group, preferably 1-7 groups, more preferably 2-4 groups are set sequentially in a longitudinal direction of the drive shaft assembly; more preferably, the mixing process in the mixer comprises: the sulfur-containing feedstock oil and the alkali metal source in the molten state enter a closed feed hopper from the top of said mixer, then access the mixer body, the stationary millstones are fixed on the mixer body and in a relatively static state; the electric motor provides power, and perform power transmission via the pulley mechanism, so that the drive shaft assembly starts to operate, in the meanwhile, the movable millstones drive the corresponding stationary millstones to rotate, such that the reactants are sufficiently blended during the flow process from the top to the bottom.

4. The method according to any of claims 1-3, wherein
the hydrogen-supplying agent in step (2) is a substance containing at least one hydrogen atom, preferably hydrogen gas and/or a substance containing at least one carbon atom and at least one hydrogen atom;
preferably, the hydrogen-supplying agent is hydrogen gas and/or C1-C5 lower carbon hydrocarbons; more preferably, the lower carbon hydrocarbon is one or more selected from the group consisting of methane, ethane, propane, butane, pentane, ethylene, propylene, butylene, pentene and diene, preferably the hydrogen-supplying agent is hydrogen gas and/or ethane; and/or
the used amount of hydrogen-supplying agent in step (2) is within a range of 1.0-3.0 mole hydrogen/mole sulfur, preferably within a range of 1.5-2.5 mole hydrogen/mole sulfur, calculated based on hydrogen gas; and/or the conditions of the hydrogenation reaction in step (2) comprise:
an operating pressure within a range of 4.0-10.0 Mpa, preferably 6.0-8.0 Mpa; and/or
a reaction temperature within a range of 200°C-430°C, preferably 300°C-380°C, more preferably 365°C-380°C.

5. The method according to any of claims 1-4, wherein
the step (2) is performed in a reactor, which is one or more selected from the group consisting of a suspended bed reactor, an ebullated bed reactor, a fixed bed reactor, and a CSTR reactor;
preferably, the reactor is a suspended bed reactor, the operating conditions comprise: a reaction pressure within a range of 4.0-10.0 MPa, preferably 6.0-8.0 MPa; a reaction temperature within a range of 200-430°C, preferably 300-380°C, more preferably 365-380°C; and/or
the step (2) is performed in the presence of a catalyst, an active metal element of the catalyst comprise one or more of molybdenum, nickel and cobalt, the catalyst is preferably one or more selected from the group consisting of metallic molybdenum, metallic nickel, metallic cobalt, molybdenum alloy, nickel alloy, cobalt alloy, molybdenum oxide, nickel oxide and cobalt oxide; the molybdenum alloy is preferably a molybdenum alloy containing nickel and/or cobalt, the nickel alloy is preferably a nickel alloy containing cobalt and/or molybdenum.

6. The method according to any of claims 1-5, wherein the separating in step (3) is performed using one or more of cyclone separation, centrifuge separation, extraction separation, filtration separation and sedimentation separation; preferably cyclone separation; more preferably, the operating temperature of the cyclone separation is within a range of 150°C-380°C, preferably 200°C-330°C, more preferably 280°C-290°C.

7. The method according to any one of claims 1-6, wherein the method comprises: before the separating in step (3) is carried out, subjecting the material obtained in step (2) to a stabilization treatment under the hydrogenation reaction conditions for a stabilization period of 1-6h, preferably 2-3h.

8. The method according to any one of claims 1-7, wherein the method further comprises: a step (4) of mixing the solid mixture obtained in step (3) with a polar solvent capable of dissolving an alkali metal sulfide, the alkali metal sulfide in the solid mixture is dissolved in the polar solvent; preferably, the polar solvent in step (4) is one or more selected from the group consisting of N,N-dimethylaniline, quinoline, 2-methyltetrahydrofuran, benzene, tetrahydrofuran, cyclohexane, fluorobenzene, trifluorobenzene, toluene, xylene, tetraethyleneglycol dimethyl ether, diglyme, isopropanol, ethylpropionaldehyde, dimethyl carbonate, dimethoxy ether, dimethyl propyleneurea, ethanol, ethyl acetate, propylene carbonate, ethylene carbonate and diethyl carbonate.

9. The method according to any one of claims 1-8, wherein the method further comprises: a step (5) of introducing the alkali metal sulfide-containing polar solvent obtained in said step (4) into an electrolysis unit, electrolyzing the alkali metal sulfide to produce an alkali metal and sulfur, and recycling the alkali metal as a raw material.

10. The method according to any of claims 1-9, wherein the method comprises the following steps:
(1) carrying out a pre-reaction of the sulfur-containing feedstock oil with an alkali metal in a mixer to obtain a pre-reaction material, the pre-reaction is performed under hydrogen-free conditions, the pre-reaction temperature is within a range of 200°C-400°C, preferably within a range of 300°C-380°C;
(2) contacting the pre-reaction material with a hydrogen-supplying agent to perform a hydrogenation reaction;
(3) separating the material obtained in step (2) to obtain a liquid-phase product fuel oil and a solid mixture;
(4) mixing the solid mixture obtained in step (3) with a polar solvent capable of dissolving an alkali metal sulfide, the alkali metal sulfide is dissolved in the polar solvent;
(5) introducing the alkali metal sulfide-containing polar solvent obtained in step (4) into an electrolysis unit, electrolyzing the alkali metal sulfide to generate an alkali metal and sulfur, and recycling the alkali metal as a raw material.

11. The fuel oil produced with the method of any one of claims 1-10.

12. An application of the method of any one of claims 1-10 in the production of low-sulfur marine fuel oil.

13. An application of the fuel oil according to claim 11 as the marine fuel oil.

14. A system for producing a fuel oil, it is **characterized in that** the system comprises:
(1) a pre-reaction unit for bringing a sulfur-containing feedstock oil and an alkali metal into contact for a pre-reaction to obtain a pre-reaction material;
(2) a hydrogenation reaction unit for contacting the pre-reaction material with a hydrogen-supplying agent to perform a hydrogenation reaction;
(3) a separation unit for separating the hydrogenation reaction material.

15. The system according to claim 14, wherein
the pre-reaction unit comprises a mixer, preferably one or more selected from the group consisting of a pipeline mixer, a liquid-liquid stirring mixer, a whirlpool mixer and a static mixer;
more preferably, the mixer comprises a closed feed hopper, a mixer body, a drive shaft assembly, a pulley mechanism and an electric motor; the mixer body comprises a stationary millstone fixed inside the mixer body and a movable millstone for cooperating with the stationary millstone; the movable millstone is connected with the drive shaft assembly, the pulley mechanism and the electric motor to provide a power source; the stationary millstone and the movable millstone are set to be corresponding in an one-by-one manner to form a group, preferably 1-7 groups, more preferably 2-4 groups are set sequentially in a longitudinal direction of the drive shaft assembly; and/or
the reaction unit comprises: one or more selected from the group consisting of a suspended bed reactor, an ebullated bed reactor, a fixed bed reactor and a CSTR reactor, preferably a suspended bed reactor; and/or
the separation unit comprises one or more selected from the group consisting of a cyclone separator, a centrifuge separator, an extraction separator, a filtration separator and a sedimentation separator, preferably a cyclone separator.

16. The system according to claim 14 or 15, wherein the system further comprises:
a dissolution unit for mixing the solid mixture obtained from the separation unit with a polar solvent capable of dissolving an alkali metal sulfide, so that the alkali metal sulfide is dissolved in the polar solvent;
an electrolysis unit for electrolyzing the alkali metal sulfide in an alkali metal sulfide-containing polar solvent obtained in the dissolution unit to generate an alkali metal and sulfur;
preferably, the individual unit is provided with a plurality of feed lines and discharge lines as required; more preferably, the system comprises: a sulfur-containing feedstock oil feed line, an alkali metal feed line, a mixer discharge line, a reactor outlet line for generated oil, a liquid product line, a solid mixture discharge line, a polar solvent feed line, a dissolution tank, a dissolved mixture discharge line, a metal or other solid component discharge line, an alkali metal sulfide-containing polar solvent discharge line, a sulfur discharge line and a recycled alkali metal feed line.

17. An application of the system according to any one of claims 14-16 in the production of fuel oil.
